# EUROPEAN PATENT SPECIFICATION

(11) **EP 1 110 657 B1**
(45) Date of publication and mention of the grant of the patent: **27.10.2004**
(21) Application number: 99125541.5
(22) Date of filing: 21.12.1999
(51) Int. Cl.: B23K 11/30

(54) **Device for removing electrode tip**
Anlage zum Abtragen von Elektrodenspitzen
Appareil pour enlever l'extrémité d'électrodes

(43) Date of publication of application: 27.06.2001
(73) Proprietor: Kyokutoh Company, Aichi-gun (JP)
(72) Inventor: Tezawa, Kazuhiro, Narumi-cho, Midori-ku, Nagoya-shi, Aichi (JP)
(74) Representative: Geyer, Werner, Dr.-Ing.

(56) References cited:
- EP-A- 0 200 162
- DE-A- 3 323 038
- GB-A- 2 255 302

## Description

The present invention relates to a device for removing an electrode tip fitted to a tapered shaft of a shank in a resistance welder by turning the electrode tip according to the preamble of claim 1 (see, for example, DE-A-33 23 038).

### Background of the Related Art

As related art devices of this kind, there are a device in which an expandable member or wedge is inserted by force between the shank and the electrode tip for separating the electrode tip from the shank, and a device in which fine impacts are applied to the electrode tip for pulling the electrode tip from the shank.(see Japanese Laid Open Patent No. 3-291175, and Japanese Laid Open Patent No. 4-9285) However, because the types of the device using the expandable member or inserting the wedge by force requires to dispose an expandable part or a wedge part between the electrode tip and the shank by inserting the expandable or the wedge part through an entire length of the electrode tip, and to provide a device for holding the removed electrode tip in place near to a fore end of the electrode tip, that causes the portion in the vicinity of the electrode tip thicker to leave a tight space to the shank disposed above and below thereof, employment of a robot becomes difficult. And, the type applying impact has inconvenience of generating noise as the impacts are applied to the electrode tip repeatedly that generates impact noise.

DE 33 23 038 A1 discloses a device for removing an electrode tip fitted to a tapered shaft of a shank in a resistance welder by turning the electrode tip, which can be automatically operated and controlled by the programme control of a welding robot. This known device comprises a body in form of a base plate onto which is mounted a drive motor for driving a turning plate in a regular or reverse direction through a gearing equipment consisting of a linkage mechanism. In the known device the turning plate is provided with a pass through hole at a center of rotation with a diameter such that the tip of the electrode which is to be removed, can be inserted therein. Additionally there is also provided a holding member which a rotation center coincident with that of the turning plate, also having an end projection and a pass through hole such that the electrode tip to be removed can be inserted therein on the rotation center. The holding member is rotatably connected to the turning plate so that its end projection is projecting from the turning plate at the underside thereof. The holding member is adapted to make a relative rotation with the turning plate and to rotate independently therefrom on reception of a rotating braking force which is applied to the outer circumferential surface of the end projection of the holding member by means of a braking device which includes a compression spring pressing a braking shoe against the circumference of the end projection, and, thereby, creating a rotation braking force to rotate the turning plate together with the holding member on reception of a rotation torque in the regular rotation of the turning plate. This simultaneous rotation of the turning plate and of the holding member is caused by 3 claws each of which having a fore end and being rotatable about a rotation shaft parallel to the axis direction of the pass through holes, and being further disposed on an inner circumference of the pass through hole of the turning plate such that, when a claw is rotated, the fore end thereof can be disposed either in an engagement region for engaging the outer circumference of an inserted electrode tip to hold it in the pass through holes, or in a disengagement region for disengaging the fore end of the claw from the outer circumference of such inserted electrode tip to release the hold on this electrode tip. When the claw engagement resistance increases as the claw is disposed in the engagement region and engages an inserted electrode tip, there will be a created rotation torque in the regular rotation of the turning plate resulting in a rotation of the turning plate together with the holding member. The design of this known device is relatively bulky and its portion in the vicinity of the electrode tip is quite thick due to the end projection projecting there from the turning plate downwardly.

### SUMMARY OF THE INVENTION

Accordingly, the present invention is directed to a device for removing an electrode tip that substantially obviates one or more of the problems due to limitations and disadvantages of the related art.

An object of the present invention is to provide a device for removing an electrode tip, in which a part near to the electrode tip can be made thinner, the electrode tip fitted to a tight space between shanks can be removed with easy, and noise generation during the work can be prevented.

Additional features and advantages of the invention will be set forth in the description which follows, and in part will be apparent from the description, or may be learned by practice of the invention. The objectives and other advantages of the invention will be realized and attained by the structure particularly pointed out in the written description and claims hereof as well as the appended drawings.

To achieve these and other advantages and in accordance with the purpose of the present invention, as embodied and broadly described, the device for removing an electrode tip fitted to a tapered shaft of a shank in a resistance welder by turning the electrode tip includes a body with a device motor and gears for driving a turning plate in regular or reverse direction, said turning plate having a pass through hole at a center of rotation with a diameter the electrode tip can be inserted therein; a holding member having a rotation center coincident with the turning plate, an end projection and a pass through hole so that the electrode tip can be inserted therein on the rotation center, the holding member being rotatably connected to the turning plate so that the end projection is projecting from the turning plate, wherein the holding member is adapted to make a relative rotation with the turning plate and to rotate independently from the turning plate on reception of a rotation braking force; at least one claw having a fore end and a rotation shaft parallel to the axis direction of the pass through holes, the claw being further disposed on an inner circumference of the pass through hole of the turning plate such that, when the claw is rotated, the fore end of the claw can be disposed either in an engagement region for engaging the outer circumference of the electrode tip to hold this electrode tip in the pass through holes, or in a disengagement region for disengaging the fore end of the claw from the outer circumference of the electrode tip to release the hold on the electrode tip; a braking device including a compression spring, wherein a rotation braking force is set by the spring to rotate the turning plate together with the holding member on reception of a rotation torque in the regular rotation of the turning plate, this rotation torque coming from the claw when the claw engagement resistance increases as the claw is disposed in the engagement region and engages the electrode tip, this device being characterized by a case fixed to the body, when the turning plate is rotatably connected to the case, the turning plate including an engagement pressing surface for pressing the claw to rotate it into the engagement region in the regular rotation, and a disengagement pressing surface for pressing the claw to rotate the claw to the disengagement region in reverse rotation; the claw being rotatably connected to the holding member by the rotation shaft; the braking device also including a pair of brake arms, each first end of the brake arms being connected to the case and each second arm end cooperating with the projection end of the holding member for transmitting the braking force thereto, and each arms having a spring seat for receiving the spring.

The holding member is preferably disposed to pass through the turning plate, with an end portion projected from the turning plate, for providing a rotation braking force applied to the holding member by means of brake arms which press an outer circumference of the holding member by using bias means, for applying a friction resistance to the outer circumference of the holding member projected from the turning plate.

Preferably, a number of the claw is one, and an inside diameter of the pass through hole of the holding member or the turning plate is dimensioned such that an outer circumference of the electrode tip pressed by the claw can be pressed onto a portion of an inner circumference of the pass through hole opposite to the claw when the claw is in the engagement region.

Grooves are preferably formed in the portion of an inner circumference of the pass through hole opposite to the claw when the claw is in the engagement region.

Preferably, three or more than three claws are provided on portions of the pass through hole in radial directions.

It is to be understood that both the foregoing general description and the following detailed description are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention:

In the drawings:
FIG. 1 illustrates a plan view of a device for removing an electrode tip in accordance with a first preferred embodiment of the present invention;
FIG. 2 illustrates a front view of a device for removing an electrode tip in accordance with a first preferred embodiment of the present invention;
FIG. 3 illustrates an enlarged sectional view across a line III-III in FIG. 1;
FIG. 4 illustrates a perspective disassembled view of a device for removing an electrode tip in accordance with a first preferred embodiment of the present invention, schematically;
FIG. 5 illustrates a cross section showing a state right before a clockwise turn of turning plate in removing the electrode tip by using the device for removing an electrode tip in accordance with a first preferred embodiment of the present invention;
FIG. 6 illustrates a cross section showing a state right after a clockwise turn of turning plate in removing the electrode tip by using the device for removing an electrode tip in accordance with a first preferred embodiment of the present invention;
FIG. 7 illustrates a section showing a state after FIG. 6 in removal of an electrode tip by using the device for removing an electrode tip in accordance with a first preferred embodiment of the present invention;
FIG. 8 illustrates a cross section showing a state right before rotation of a holding member in removing the electrode tip by using the device for removing an electrode tip in accordance with a first preferred embodiment of the present invention;
FIG. 9 illustrates a cross section showing a state when the turning plate is turned in a reverse direction in the device for removing an electrode tip in accordance with a first preferred embodiment of the present invention;
FIG. 10 illustrates a plan view of a device for removing an electrode tip in accordance with a second preferred embodiment of the present invention;
FIG. 11 illustrates a front view of a device for removing an electrode tip in accordance with a second preferred embodiment of the present invention;
FIG. 12 illustrates an enlarged sectional view across a line XII-XII in FIG. 10;
FIG. 13 illustrates a perspective disassembled view of a device for removing an electrode tip in accordance with a second preferred embodiment of the present invention, schematically;
FIG. 14 illustrates a cross section showing a state right before a clockwise turn of turning plate in removing the electrode tip by using the device for removing an electrode tip in accordance with a second preferred embodiment of the present invention;
FIG. 15 illustrates a cross section showing a state right after a clockwise turn of turning plate in removing the electrode tip by using the device for removing an electrode tip in accordance with a second preferred embodiment of the present invention;
FIG. 16 illustrates a cross section showing a state right before rotation of a holding member in removing the electrode tip by using the device for removing an electrode tip in accordance with a second preferred embodiment of the present invention; and,
FIG. 17 illustrates a cross section showing a state when the turning plate is turned in a reverse direction in the device for removing an electrode tip in accordance with a second preferred embodiment of the present invention.

### DETAILED DESCRIPTION OF THE PREFERRED EMBODIMENT

Reference will now be made in detail to the preferred embodiments of the present invention, examples of which are illustrated in the accompanying drawings.

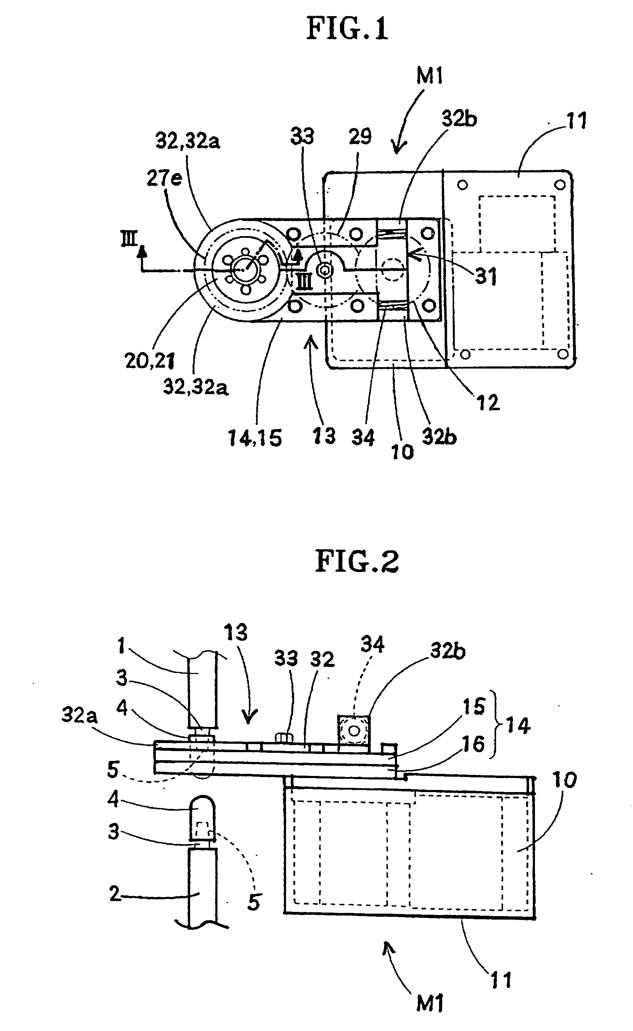

Referring to FIGS. 1 and 2, the device M1 for removing an electrode tip in accordance with a first preferred embodiment of the present invention is a device for removing an electrode tip 4 fitted to a shank 1 and 2 of a welding robot as a resistance welder includes a body 10 connected to an arm(not shown) of a working robot, and a fore end 13 projected from a side of the top surface of the body 10 in a horizontal direction for inserting between the shanks 1 and 2 when the electrode tip 4 is removed, for mounting on the electrode tip 4. The reference numeral 5 denotes a tapered hole of the electrode tip 4 fitted to the tapered shaft 3 of the shanks 1 and 2.

Referring to FIGS. 1 ∼ 3, the body 10 has a driving motor(not shown) fitted with a reduction gear in a housing 11 for rotating a driving gear 12 (explained later) in a regular or reverse direction. The fore end 13 includes a case 14 fixed to the housing 11, a holding member 20 and a turning plate 27 accommodated in the case 14, a claw 25 held in the holding member 20, an intermediate gear 29 engaged with the driving gear 12 for turning the turning plate 27, and compression rings 18 screwed on top and bottom of the case 14.

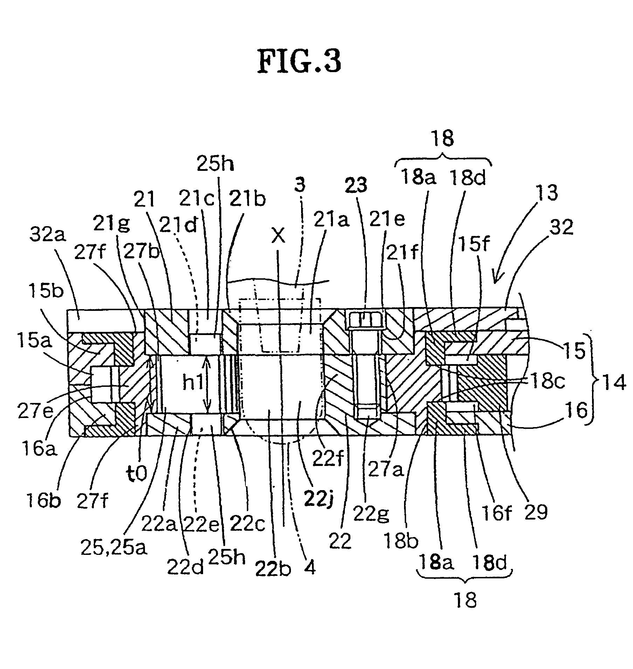

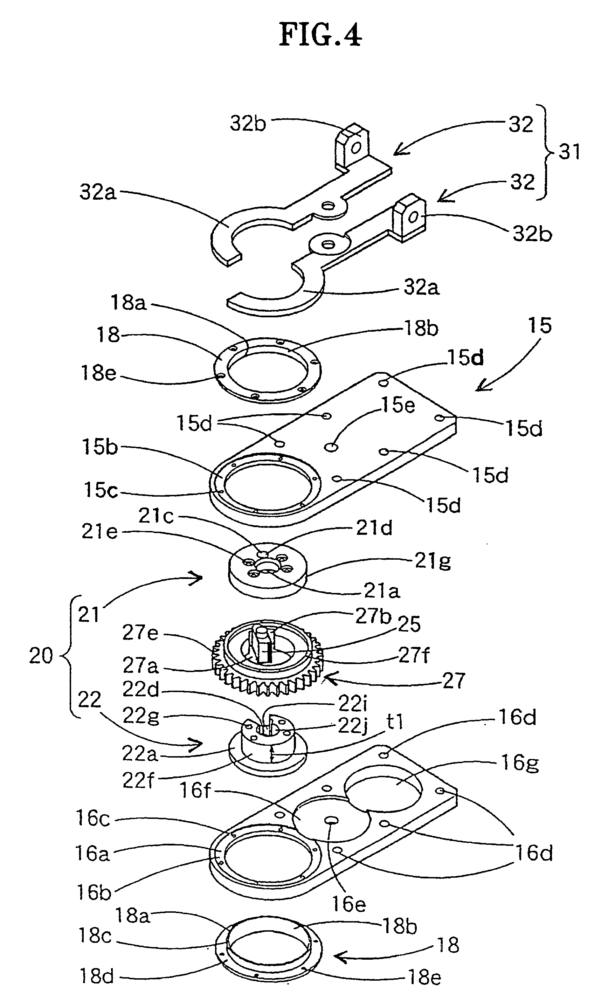

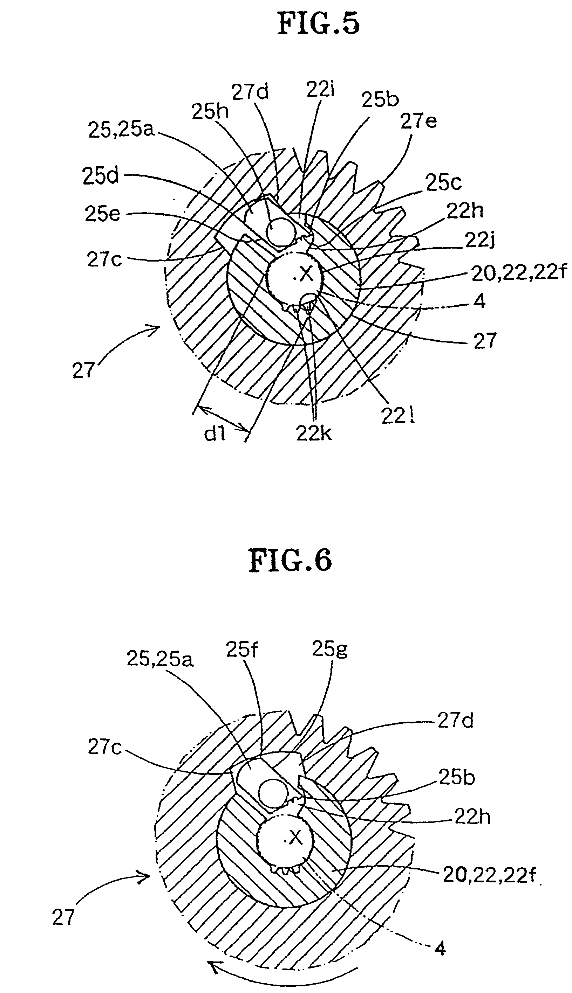

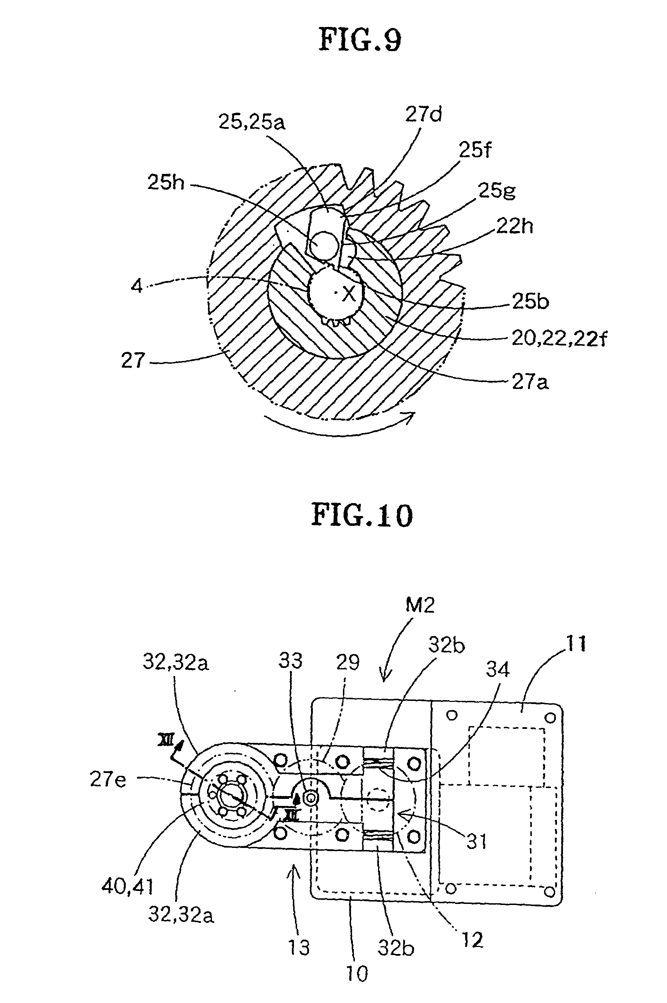

Referring to FIGS. 3 and 4, the turning plate 27 of a substantially disk form includes a hole 27a with an inside diameter greater than an outside diameter of the electrode tip 4, a gear portion 27e on an outer circumference for engagement with the intermediate gear 29, and cylindrical ribs 27f on top and bottom surfaces thereof. A rotation center X of the turning plate 27 is provided in an up and down directions at the center of the hole 27a. A recess 27b is formed in an inner circumference of the turning plate 27 for placing the claw 25 therein. As shown in FIG. 5, one side surface of the recess 27b is an engagement pressing surface 27c for turning the claw 25 to an engagement region where a fore end 25b of the claw 25 engages with the electrode tip 4 by pressing a convex portion 25f and a side surface 25e of the claw 25 at turning the turning plate 27. And, the other side surface of the recess 27b is a disengagement pressing surface 27d for turning the fore end 25b of the claw to a disengagement region at which the fore end 25b makes no interference to the electrode tip 4 by pressing the convex portion 25f and a side surface 25g of the claw 25(see FIG. 9) at a reverse turning of the turning plate 27.

Referring to FIG. 3 ∼ 9, the claw 25 includes a body 25a of a substantially rectangular plate, and a shaft 25h of a cylindrical column on top and bottom surfaces thereof. The fore end 25b of the body 25 has a sharp angled form, and a plurality of grooves taking the high friction with the electrode tip 4 into consideration. That is, the first embodiment claw 25 is formed to a dimension at which the fore end 25b is projected into a pass through hole 22j in the holding member 20 when the claw 25 is turned centered on the shafts 25h disposed in parallel to the rotation center X if the shaft 25h in the up and down directions is disposed in a space portion 22i of the rib 22f, which will be explained later, on the holding member 20 in the vicinity of the fore end 25b such that a cross section of the claw 25 is projected from the recess 27b of the turning plate 27 into the hole 27a and the space portion 22i of the rib 22f. And, a height h1 of the body 25a(see FIG. 3) is set to be slightly smaller than a thickness t1 (FIG. 4) of the rib 22f on the holding member 20, which will be explained, later. As shown in FIGS. 3 and 4, the first embodiment holding member 20 having the same rotation center X with the turning plate 27 includes a disk 21, and a disk 22 with a stepped portion. The disk 21 has an outside diameter rotatable in an inner circumference of the rib 27f on a top surface of the turning plate 27 and a pass through hole 21a having an inside diameter slightly greater than the outside diameter of the electrode tip 4. The disk 21 has a thickness greater than a height of the rib 27f so that an outer circumference of the disk 21 projected from the rib 27f serves as a braking surface 21g of a brake arm 32 explained later. And, the disk 21 has a tapered surface 21b at an upper edge around the pass through hole 21a for easy insertion of the electrode tip 4 from above. And, there are one holding hole 21c, and two pair of fitting holes 21e on opposite sides of the holding hole 21c around the pass through hole 21a. The fitting hole 21e has a smaller inside diameter at a lower portion to form a stepper surface 21f. The disk 22 with a stepped portion has a disk portion 22a of a disk form and rib 22f projected upward from the disk portion 22a. The disk portion 22a has an outside diameter rotatable in an inner circumference of the rib 27f on a bottom surface of the turning plate 27 and a pass through hole 22b at a center thereof having an outside diameter slightly greater than the electrode tip 4. The disk portion 22a has a thickness equal to a height of the rib 27f, and a tapered surface 22c formed at a bottom side edge of the pass through hole 22b for easy insertion of an electrode tip from below. And, there are a holding hole 22d in a circumference of the pass through hole 22b in correspondence to the holding hole 21c in the disk 21. The shafts on top and bottom of the claw 25 are inserted in these holding holes 21c and 22d, respectively. Accordingly, in the case of the first embodiment of the present invention, an inside surface of the holding holes 21c and 22d in a clockwise direction centered on the rotation center X is a rotating action surface 21d and 22e which takes a torque when the turning plate 27 rotates in a regular direction. As shown in FIGS. 3 ∼ 5, the rib 22f has a substantially cylindrical form projected upward from a rim of the pass through hole 22b on a top surface of the disk portion 22a with the space portion 22i provided in the holding hole 22d region. The rib 22f has an outside diameter which can be inserted in the hole 27a in the turning plate 27 and an inside diameter d1 of the pass through hole 22j of the inner circumference formed equal to the pass through hole 22b. There are a plurality of grooves 22k formed in the inner circumference of the pass through hole 22j at a portion opposite to the space portion 22i. And, the rib 22f has a thickness(height) t1 slightly greater than a thickness t0 of an inside circumference of the ribs 27f on the turning plate 27. Also, the rib 22f has four screw holes 22g on the top surface thereof in correspondence to the fitting holes 21e in the disk 21. And, as shown in FIGS. 5 ∼ 8, there is a groove 22h formed in one side surface of the space portion 22i of the rib 22f for preventing interference with the claw 25 until the claw is disposed in the engagement region. The inside diameter d1 of the pass through hole 22j in the holding member 20 is dimensioned such that a portion(a groove side 22k portion) opposite to the claw 25 at the inner circumference of the pass through hole 22b is pressed by the outer circumference of the electrode tip 4 pressed by the claw 25 when the claw 25 is brought into the engagement region. In this first embodiment, the inside diameter d1 of the pass through hole 22j is 17φ, and an outside diameter of the electrode tip 4 is 16φ. As shown in FIGS. 1 ∼ 4, the case 14 includes an upper case 15 and a lower case 16. And, each of the upper case 15 and the lower case 16 has an annular projection 15b and 16b at an inside circumference on the fore end side to form a pass through hole 15a and 16a corresponding to the outside diameter of the gear portion 27e in the turning plate 27, with six screw holes 15c and 16c for bolts(not shown) formed in the annular projection 15b and 16b for fitting the compression ring 18 thereto. And, each of the upper case 15 and the lower case 16 has six connection holes 15d and 16d in a periphery of the body 10 for connection to each other. That is, the connection hole 15d is a simple pass through hole while the connection hole 16d is a threaded hole. Each of the upper case 15 and the lower case 16 has a fitting hole 15e and 16e for fitting a holding bolt 33 for rotatably holding the intermediate gear 29 and a brake arm 32 of a brake device 31 explained later. The fitting hole 15e is a simple pass through hole while the fitting hole 16e is a threaded hole. There are recesses 15f(see FIG. 3) and 16f for accommodating the intermediate gear 19, and recesses 15g(not shown) and 16g(see FIG. 4) for accommodating the driving gear 12 in opposite surfaces of the upper case 15 and the lower case 16. The recess 16g forms a pass through hole. As shown in FIGS. 3 and 4, the compression ring 18, provided for rotatably accommodating the turning plate 27 within the upper case 15 and the lower case 16 in a state the turning plate 27, includes a cylindrical portion 18a of a cylinder form of a size which can be inserted in the inner circumference of the annular projection 15b and 16b on the upper case 15 and the lower case 16, and a jaw portion 18d formed on an outer circumference of an end portion of the cylindrical portion 18a. Each of the jaw portions 18d has fitting holes 18e corresponding to the threaded holes 15c and 16c in the upper case 15 and the lower case 16. The compression rings 18 are fitted to the upper case 15 and the lower case 16 by bringing the jaw portions 18d into contact with the annular projections 15b and 16b on the upper case 15 and the lower case 16 by means of bolts(not shown) threaded into the threaded holes 15c and 16c via the fitting holes 18e such that end surfaces 18c of the cylindrical portions 18a spaced from the jaw portion 18d are at opposite sides. Each of the fitting holes 18e is provided with a stepped surface in an inside surface for receiving a bolt head to prevent projection of the bolt head when the compression rings 18 are fitted to the upper case 15 and the lower case 16. Thus, when the upper case 15 and the lower case 16 are fitted, each of the compression rings 18 blocks the outer circumference of the cylindrical rib 27f of the turning plate 27 from the inner circumference 18b of the cylindrical portion 18a and the top and bottom surfaces of the gear portion 27e of the turning plate 27 between the end surfaces 18c under a condition the turning plate 27 is rotatable. The braking device 31 includes one pair of brake arms 32 and a compression coil spring 34. Each of the one pair of brake arms 32 has a semicircular compression piece portion 32a at a fore end thereof for covering one half of the braking surface 21g on the disk portion 21 of the holding member 20, a bolt 33 at a center portion thereof for rotatably supporting the brake arms 32, and a spring seat 32b at a far end for disposing a compression coil spring 34 therebetween.

In assembly of the fore end portion 13, under a condition the turning plate 27 and the intermediate gear 29 are disposed between the upper and lower cases 15 and 16, the compression rings 18 are fitted to the upper and lower cases 15 and 16 with bolts(not shown), and bolts are passed through the connecting holes 15d and 16d, to connect the upper and lower cases 15 and 16 to each other. Then, the claw 25 is disposed in the recess 27b of the turning plate 27 and, one the same time, the disk 21 and the disk 22 with a stepped portion are disposed from top and bottom of the turning plate 27. In detail, the rib 22f is inserted into the pass through hole 27a from below, and on the same time, each of the fitting holes 21e are matched the threaded holes 22g, and the shaft 25h is inserted into each of the holding holes 21c and 22d. Provided that each of the connecting bolts 23 are threaded into the threaded holes 22g through each of the fitting holes 21e, the disk 21 and the disk 22 with a stepped portion are fastened, to assemble the holding member 20, and, on the same time, the holding member 20 is disposed to pass through the turning plate 27. In this instance, since the height t1 of the rib 22f of the holding member 20 is slightly greater than the height h1 of the body 25a of the claw 25, and the inside surface thickness t0 of the ribs 27f on the turning plate 27, the claw 25 is rotatably held by the holding member 20 centered on the shafts 25h, to restrict the holding member within the case 14 by the rib 27f and the like such that the holding member can make a relative movement with the turning plate 27 by matching the rotation center X with the turning plate 27. Under a condition that the compression coil spring 34 is disposed between the spring seats 32b , provided that the compression piece portions 32a are brought into contact with the braking surfaces 21g on the disk 21 of the holding member 20, and the one pair of brake arms 32 are fitted to the case 14 by using holding bolts 33, the fore end portion can be assembled. It is preferable that, after the fore end portion 13 is assembled, the intermediate gear 29 and the driving gear 12 are engaged, and the fore end portion 13 and the body 10 are assembled.

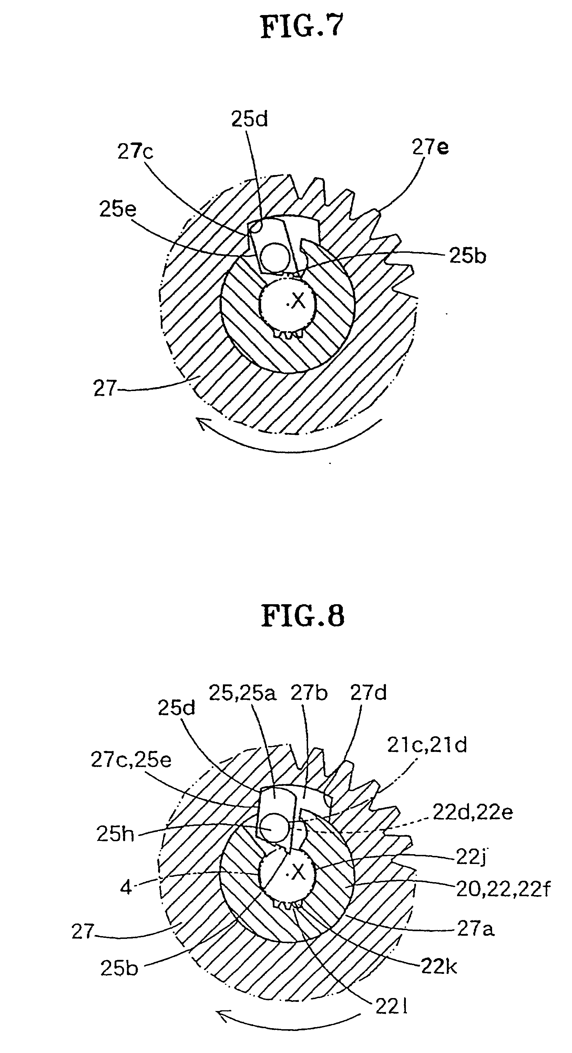

As shown in FIGS. 5 ∼ 7, in the device M1 for removing an electrode tip in accordance with a first preferred embodiment of the present invention, in removing the electrode tip 4, the turning plate 27 is placed around the electrode tip 4 such that the electrode tip 4 is inserted in the pass through holes 21a and 22b in the holding member 20 which is concentric to the pass through hole 27a in the turning plate 27, and the driving motor in the body 10 is driven, to turn the turning plate 27 in a clockwise direction with reference to the rotation center X by using the driving gear 12 and the intermediate gear 29. Then, as shown in FIGS. 5 ∼ 7, the engagement pressing surface 27c of the turning plate 27 is engaged with the convex portion 25d and side surface 25e of the claw 25, to turn the claw 25 in a clockwise direction taking the shaft as a rotation center until, as shown in FIG. 8, the claw 25 rotates to the engagement region when the fore end 25b of the claw 25 is engaged with the outer circumference of the electrode tip 4, allowing to hold the electrode tip 4 in the pass through hole 22j. In this instance, in the case of the first embodiment, the electrode tip 4 is engaged with the fore end 25b of the claw 25 with the electrode tip 4 tilted slightly such that the electrode tip 4 presses a side of groove portion 22k of the pass through hole 22j. Under this condition, if the turning plate 27 is rotated in a clockwise direction, the fore end 25b of the claw 25 is directed toward a center direction of the electrode tip 4, making a deeper engagement with the electrode tip 4 with a greater resistance of engagement of the claw 25. When rotation of the claw 25 becomes difficult, a rotation torque of the turning plate 27 exerts on the rotating action surfaces 21d and 22e, which is a supporting portion of the claw 25, so that the holding member 20 is rotated in a clockwise direction together with the turning plate 27 against a resistance of a rotation braking force of the brake arms 32. In this instance, as the holding member 20 rotates under a state the claw 25 is made to engage with the electrode tip 4 with the electrode tip 4 held in the pass through hole 22j, the electrode tip 4 is rotated in a clockwise direction of the turning plate 27. Because even a slight rotation of the electrode tip 4 releases the fitting between the tapered shaft 3 of the shank 1 and the electrode tip 4, if the fore end portion 13 is moved downward together with the body 10 from the fore end side of the shank 1, the electrode tip 4 can be removed from the shank 1. After the fore end portion 13 is brought over a collection box, the driving motor in the body 10 side is driven reversely, to make a reverse rotation of the turning plate 27 in an anticlockwise direction with reference to the rotation center X. Then, as shown in FIG. 9, the disengagement pressing surface 27d of the turning plate 27 comes into contact with the convex portion 25f and the side surface 25g of the claw 25, to rotate the claw 25 in an anticlockwise direction taking the shaft 25h as a rotation center so that the fore end 25b of the claw 25 releases the electrode tip 4 in the pass through hole 22j, and is disposed in the disengagement region. At the end, the electrode tip 4, being released from the engagement of the fore end 25b of the claw, on the same time, to release the compression force onto the groove portion 22k in an inner circumference of the pass through hole 22j, is dropped from the pass through hole 22j in the holding member 20 as well as the pass through hole 27a in the turning plate 27 into the collection box. That is, since the reversing of the turning plate 27 is a rotation in a direction in which the engagement resistance of the claw 25 is reduced, not the holding member 20 is rotated because the rotation braking force of the compression piece portions 32a in the brake arms 32 acts on the braking surfaces 21g, but only the claw 25 is rotated to the disengagement region. And, the electrode tip 4 on the lower shank 2 can also be collected into the collection box with easy in a manner the same with the electrode tip 4 on the upper shank 1 if the fore end portion 13 is brought around the electrode tip 4, the turning plate 27 is rotated in a regular direction, the fore end portion is moved to a required position, and the turning plate 27 is reversed. Therefore, since the device M1 for removing an electrode tip in accordance with a first preferred embodiment of the present invention has the turning plate 27, the holding member 20 having the claw 25 held therein, and the case 14 having those two accommodated therein, the brake arms 32, and etc., in the vicinity of the electrode tip 4, and moreover; since a rotating mechanism itself that removes the electrode tip 4 also serves as a mechanism that holds the removed electrode tip 4, the device M1 can be made slim, to permit easy removal of the electrode tip 4 fitted in a tight space between the shanks 1 and 2. And, what is required in the removal of the electrode tip 4 is a simple engagement of the fore end 25b of the claw 25 with the electrode tip 4, there is no noise of impact, and occurrence of noise during working is suppressed. Thus, the first embodiment device has the holding member 20 disposed to pass through the pass through hole 27a in the turning plate 27, the end portion 21g of the disk 21 projected from the turning plate 27, and the rotation braking force applied to the holding member 20 is generated by the brake arms 32 pressing the outer circumference 21g to apply a friction force to the outer circumference 21g by using the compression coil spring 34. According to this, because the height of the brake arms 32 can be blocked to be within the height of the outer circumferences 21 g, and because portions of the braking device 31 other than the brake arms 32 can be disposed away from a portion in the vicinity of the electrode tip 4, a thickness of the portion in the vicinity of the electrode tip 4 in the removing device M1 can be made, not thick, but slim, that permits easy removal of the electrode tip 4 fitted in the tight space between the shanks 1 and 2. Moreover, in the first embodiment device, one claw 25 is provided, and the inside diameter d1 of the pass through hole 22j in the holding member 20 is dimensioned such that the side portion of the groove portion 22k opposite to the claw 25 in the inner circumference of the pass through hole 22 can be pressed by the outer circumference of the electrode tip 4 pressed by the claw 25 when the claw 25 is disposed in the engagement region. Accordingly, since the electrode tip 4 is held in the pass through hole 22j in the holding member 20 such that the electrode tip 4 is gripped between two points, i.e., the fore end 25b of the claw 25 and the side portion of the groove portion 22k in the inner circumference of the pass through hole 22j brought into contact with the electrode tip 4, in a manner that the fore end 25b of the claw is engaged with the electrode tip 4 only in one side, a stable hold of the electrode tip 4 is possible. Moreover, in the case of the first embodiment device, because the groove portion 22k is formed in a portion of the inner circumference of the pass through hole 22j opposite to the claw 25 when the claw 25 is disposed in the engagement region, and because a convex portion 221 in a periphery of the groove portion 22k can also be engaged with the electrode tip 4 together with the fore end 25b of the claw when the electrode tip 4 is held, further stable hold on the electrode tip 4 is possible. Though the first embodiment device has a system in which the electrode tip 4 is held by gripping the electrode tip 4 by means of the fore end 25b of the claw and the inner circumference surface of the pass through hole 22j in the holding member 20, as explained later, a system may be provided, in which the electrode tip 4 is held between the fore end 25b of the claw and the inner circumference of the pass through hole 27a in the turning plate 27.

Or, as a second embodiment device M2 shown in FIGS. 10 ∼ 13, a system may be provided, in which only the claw 45 holds the electrode tip 4. The second embodiment device M2 is different from the first embodiment device in the claw 45, the holding member 40 for holding the claw 45, and the turning plate 47. The upper and lower cases 15 and 16 in the case 14, the compression rings 18 and 18, the intermediate gear 29, the brake device 31, the driving gear 12, and the body 10 are the same with the components in the first embodiment device, of which explanations will be omitted.

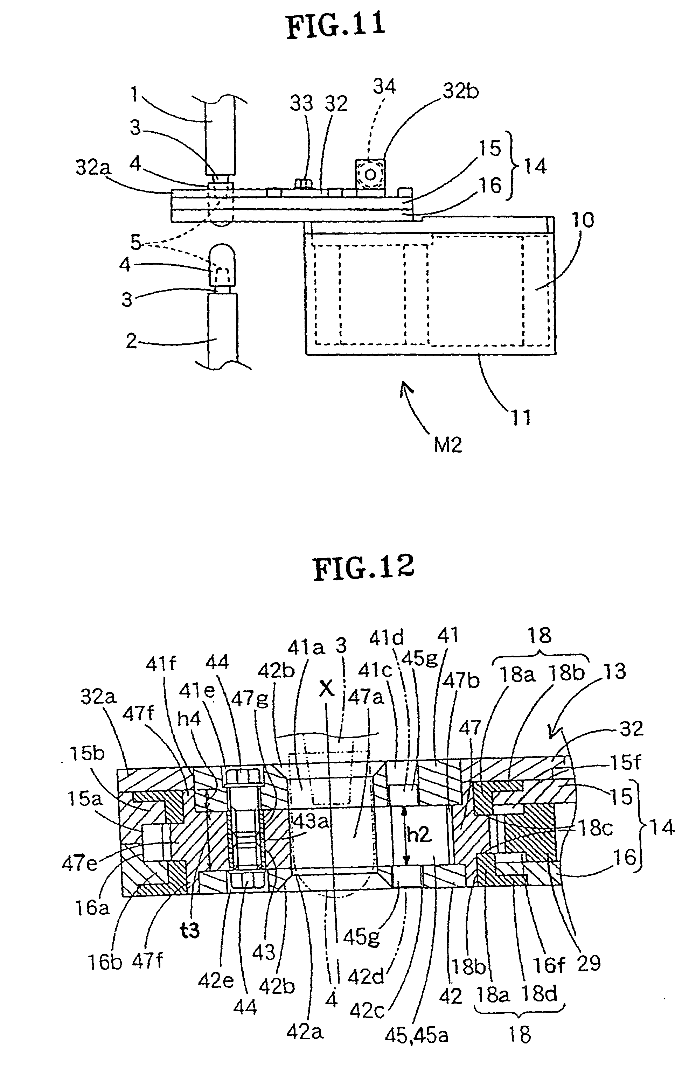

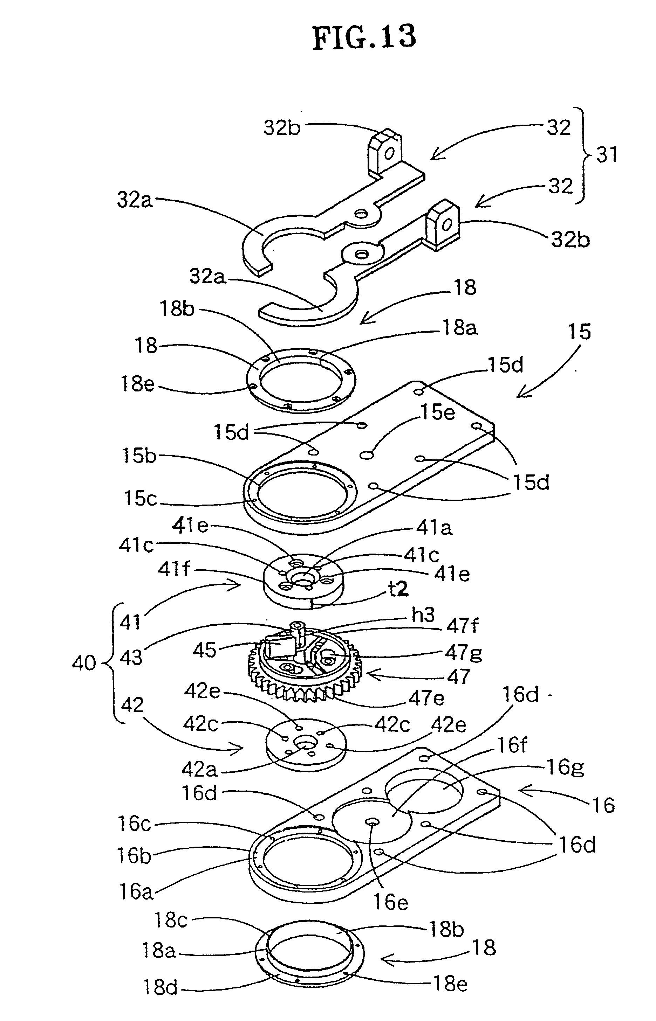

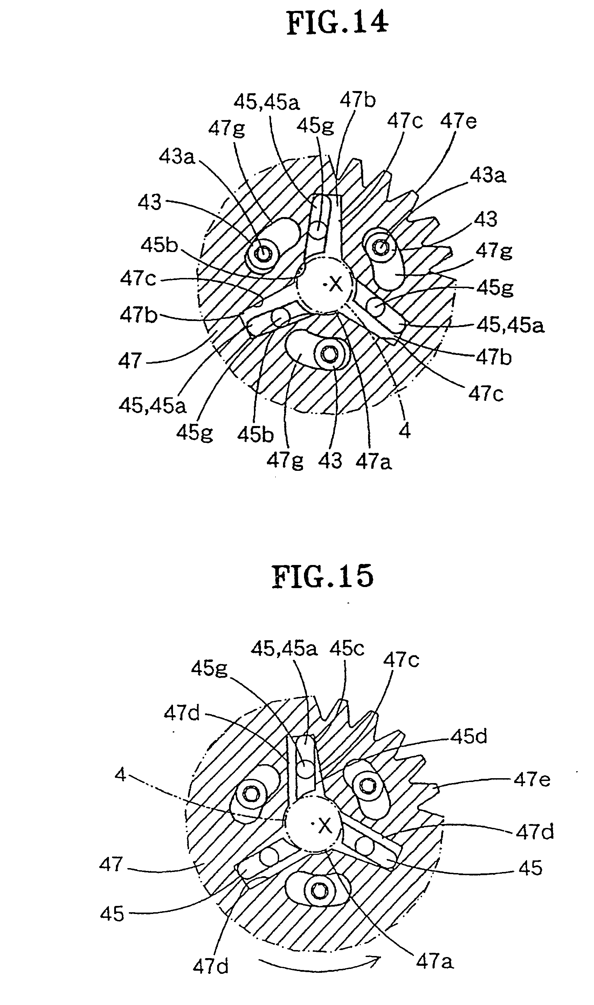

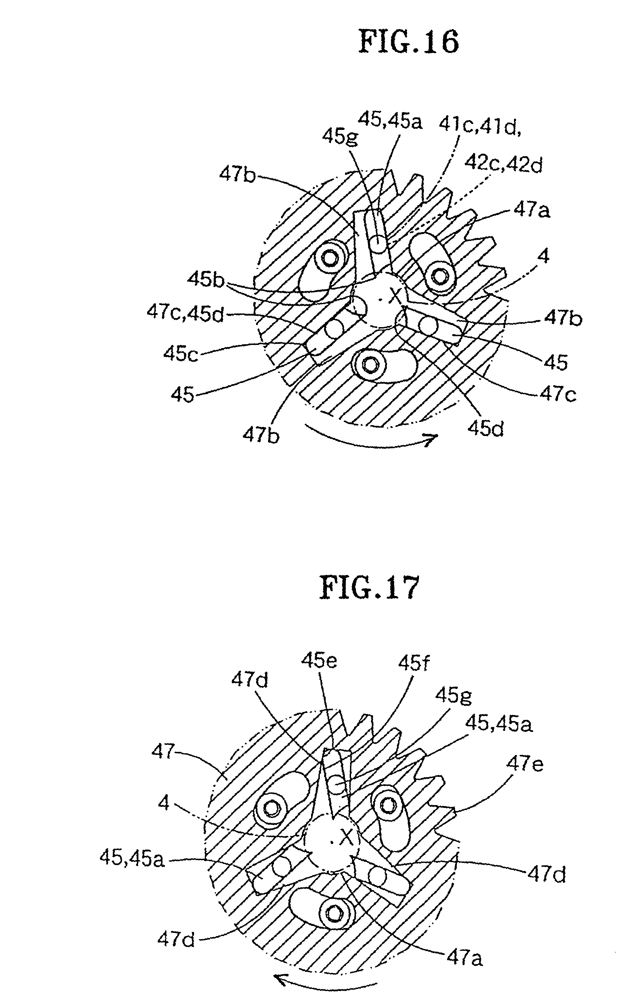

Referring to FIGS. 12 ∼ 14, the turning plate 47 of a substantially a disk form includes a pass through hole 47a with an inside diameter slightly greater than an outside diameter of the electrode tip 4 formed in a central portion, and a gear portion 47e engaged with the intermediate gear 29, disposed in the pass through holes 16a of the upper and the lower cases 15 and 16, and blocked in up and down directions only to be rotatable between the cylindrical end portions 18c of the upper and lower compression rings 18. The rotation center X of the turning plate 47 is set at the center of the pass through hole 47a in up and down directions. And, the turning plate 47 has annular ribs 47f on top and bottom surfaces for slidably blocking inner circumferences of the cylindrical portions 18a of the compression rings 18. The pass through hole 47a has three slots 47b for disposing three claws 45 therein respectively in a radial direction spaced in equal angles Each of the slots 47b has an engagement compression surface 47c for rotating the claw 45 until the fore end 45b of the claw is in an engagement region at which the fore end 45b engages with the electrode tip 4 when one side surface presses the convex portion 45c and the side surface 45d of the claw 45 when the turning plate is turned in a regular direction. And, as shown in FIG. 17, when the turning plate 47 reverses, the other side surface of the slot 47 is a disengagement compression surface 47d which rotates the fore end 45b of the claw to a disengagement region where no interference with the electrode tip 4 occurs by pressing the convex portion 45e and the side surface 45f of the claw 45 when the turning plate 47 reverses. The second embodiment turning plate 47 has a guide hole 47g of a circular arc form between the slots 47b centered on the rotation center X of the turning plate 47. This guide holes 47g guide a rotation of the holding member 20 relative to the turning plate 47. As shown in FIGS. 12 ∼ 14, each claw 45 has a body 45a of substantially rectangular plate, and shafts of circular columns on a top and a bottom end surfaces of the plate. Fore end 45b of the body 45a is a sharp angled. That is, each of the claws 45 in the second embodiment device is formed to a dimension at which the fore end 45b can be projected into the pass through hole 47a in the turning plate 47 when the claw 45 is rotated taking the shafts 45g which is parallel to the rotation center X as a rotation center by disposing the upper and lower shafts 45g approx. middle of an origin side(convex portion 45c and 45e side, see FIGS. 15 and 17) and the fore end 45b side. The body 45a has a height h2(see FIG. 12) slightly smaller than a height h3(see FIG. 13) of the spacer 43 of the holding member 40 explained later. And, as shown in FIGS. 12 and 13, the holding member 40 in the case of the second embodiment device having a rotation center concentric with the turning plate 47 includes two sheets of disks 41 and 42, three pieces of spacers, and six connecting bolts for connecting the above. Each of the disks 41 and 42 has an outside diameter rotatable in the inner circumference of the ribs 47f on top and bottom of the turning plate 47, and a pass through hole 41a and 42a of an inside diameter equal to the pass through hole 47a in the turning plate 47 which is slightly greater than the outside diameter of the electrode tip 4. Each of the disks 41 and 42 has a tapered surface 41b and 42b at an edge of the pass through hole 41a and 42a in a surface facing outside of the disk for easy insertion of the electrode tips 4 from top and bottom thereof. And, the disks 41 and 42 have three holding holes 41c and 42c and three fitting holes 41 e and 42e around each of the pass through holes 41 a and 42a to be opposite to each other respectively in concentric and radial direction. The holding holes 41e and 42e serve as portions that rotatably hold the claws 45 by receiving the upper and lower shafts 45g of the claws 45 and serve as portions that act as rotation action surfaces 41d and 42d which receives a rotation torque when a portion of an inner circumference of the holding holes 41c and 42c is rotated together with the turning plate 47 turning in a regular direction. That is, in the case of second embodiment, the bearing surfaces 41d and 42d are surfaces on a counter clockwise direction when the rotation center X of the turning plate 47 in the inner circumference of the holding holes 41c and 42c are taken as centers. Each of the fitting holes 41e and 42e has a stepped surface for receiving a head of the connecting bolt 44 by forming an inside diameter of an inside smaller. The disk 41 has a thickness t2(see FIG. 13) greater than a height h4 of the rib 47f on the top surface of the turning plate 47, so that an outer circumference surface projected from the rib 47f becomes a braking surface 41 of the compression piece portion 32a on the brake arms 32 . And, the thickness of the disk 42 is equal to a height of the rib 47f on the bottom side of the turning plate 47. Each of the spacers 43 of a cylindrical form has an outside diameter which can be inserted in the guide hole 47g and a thread hole 43a for the connecting bolt 44 in an inner circumference thereof. As explained, each of the spacers 43 has a height h3 (see FIG. 13) slightly greater than a height h2 of the body 45a of the claw 45, and slightly greater than a thickness t3 of the inner circumference of the ribs 47f on the turning plate 47.

The process for assembling the fore end portion 13 in the second embodiment device will be explained. Under a condition the turning plate 47 and the intermediate gear 29 are disposed between the upper and lower cases 15 and 16, the compression rings 18 are fitted to the upper and lower cases 15 and 16 with bolts(not shown), and the bolts are passed through the connecting holes 15d and 16d, to connect the upper and lower cases 15 and 16 to each other. Then, the claws 45 are disposed in the slots 47b in the turning plate 47, one the same time, the spacers 43 are disposed in the guide holes 47g in the turning plate 47, and the disks 41 and 42 are disposed in the turning plate 47 from above and below, respectively. Then, the fitting holes 41e and 42e and the thread holes 43a in the spacers 43 are matched, and the shafts 45g are inserted in the holding holes 41c and 42c. When the connecting bolts 44 are screwed into the thread holes 43a through the fitting holes 41e and 42e, the disks 41 and 42 and the three spacers 43 are connected, to assemble of the holding member 40 as well as to dispose the holding member 40 in the turning plate 47 in a fashion to pass through the turning plate 47. In this instance, because each of the spacers 43 in the holding member 40 has a height h3 slightly greater than a height h2 of the body 45a of each of the claws 45, and a thickness t3 of an inner circumference of each of the ribs 47f on the turning plate 47, each of the claws 45 is rotatably held by the holding member 40 centered on the shafts 45g, to restrict the holding member 40 within the case 14 by the rib 47f, the guide holes 47g, and the like such that the holding member 40 can make a relative movement with the turning plate 47 by matching the rotation center X with the turning plate 47. Under a condition that the compression coil spring 34 is disposed between the spring seats 32b , provided that the compression piece portions 32a are brought into contact with the. braking surfaces 41f on the disk 41 of the holding member 40, and the one pair of brake arms 32 are fitted to the case 14 by using holding bolts 33, the second embodiment fore end portion 13 can be assembled. It is preferable that, after the fore end portion 13 is assembled, the intermediate gear 29 and the driving gear 12 are engaged, and the fore end portion 13 and the body 10 are assembled.

As shown in FIGS. 14 ∼ 17, in the device M2 for removing an electrode tip in accordance with a second preferred embodiment of the present invention, in removing the electrode tip 4, the turning plate 47 is placed around the electrode tip 4 such that the electrode tip 4 is inserted in the pass through hole 47a in the holding member 40, and the driving motor in the body 10 is driven, to turn the turning plate 47 in a regular direction in an anticlockwise direction with reference to the rotation center X by using the driving gear 12 and the intermediate gear 29. Then, as shown in FIGS. 14 and 15, the engagement pressing surface 47c of the turning plate 47 is brought into contact with the convex portion 45c and side surface 45d of each of the claws 45, to turn each of the claws 45 in the anticlockwise direction taking the shaft 45g as rotation centers until, as shown in FIG. 16, each of the claw 25 rotates to the engagement region when the fore end 45b of each of the claws 45 is engaged with the outer circumference of the electrode tip 4, allowing to hold the electrode tip 4 in the pass through hole 47a. Under this condition, if the turning plate 27 is rotated further in the regular direction, the fore end 45b of each of the claws 45 is directed toward a center direction of the electrode tip 4, making a deeper engagement with the electrode tip 4 with a greater resistance of engagement of the claws 25. When rotation of the claws 45 become difficult, a rotation torque of the turning plate 47 exerts on the rotating action surfaces 41d and 42d, which is a supporting portion of each of the claws 45, so that the holding member 40 is rotated in the regular direction together with the turning plate 47 against a resistance of a rotation braking force of the brake arms 32. In this instance, as the holding member 40 rotates under a state each of the claws 25 is made to engage with the electrode tip 4 in a state the electrode tip 4 is held within the pass through hole 47a, the electrode tip 4 is rotated in an anticlockwise direction which is a regular rotating direction of the turning plate 47. Because even a slight rotation of the electrode tip 4 releases the fitting between the tapered shaft 3 of the shank 1 and the electrode tip 4, if the fore end portion 13 is moved downward together with the body 10 from the fore end side of the shank 1, the electrode tip 4 can be removed from the shank 1. After the fore end portion 13 is brought over a collection box(not shown), the driving motor in the body 10 side is reversed, to make a reverse rotation of the turning plate 27 in a clockwise direction with reference to the rotation center X. Then, as shown in FIG. 17, the disengagement pressing surface 47d of the turning plate 47 comes into contact with the convex portion 45e and the side surface 45f of each of the claws 45. to rotate the claws 45 in a clockwise direction taking the shaft 45g as a rotation center so that the fore end 45b of each of the claws 45 releases the electrode tip 4 in the pass through hole 47a, and is disposed in the disengagement region. At the end, the electrode tip 4, being released from the engagement of the fore end 45b of each of the claws 45, is dropped from the pass through hole 47a in the turning plate 47 into the collection box. That is, since the reversing of the turning plate 47 is a rotation in a direction in which the engagement resistance of each of the claws 45 is reduced, not the holding member 40 is rotated because the rotation braking force of the compression piece portions 32a in the brake arms 32 acts on the braking surfaces 41f, but only each of the claws 45 is rotated to the disengagement region. And, the electrode tip 4 on the lower shank 2 can also be collected into the collection box with easy in a manner the same with the electrode tip 4 on the upper shank 1 if the fore end portion 13 is brought around the electrode tip 4, the turning plate 47 is rotated in a regular direction, the fore end portion is moved to a required position, and the turning plate 47 is reversed. Therefore, since the device M2 for removing an electrode tip in accordance with a second preferred embodiment of the present invention has the turning plate 47, the holding member 40 having the claws 45 held therein, and the case 14 having those two accommodated therein, the brake arms 32, and etc., in the vicinity of the electrode tip 4, and moreover, since a rotating mechanism itself that removes the electrode tip 4 also serves as a mechanism that holds the removed electrode tip 4, the device M2 can be made slim, to permit easy removal of the electrode tip 4 fitted in a tight space between the shanks 1 and 2. And, what is required in the removal of the electrode tip 4 is a simple engagement of the fore end 45b of the claws 45 with the electrode tip 4, there is no noise from impact, and occurrence of noise during working is suppressed. Thus, the second embodiment device also has the holding member 40 disposed to pass through the turning plate 47, the end portion of the disk 41 projected from the turning plate 47, and the rotation braking force applied to the holding member 40 is generated by the brake arms 32 pressing the outer circumference 41f to apply a friction force to the outer circumference 41 f by using the compression coil spring 34. According to this, because the height of the brake arms 32 can be restricted to be within the height of the outer circumferences 41f, and because portions of the braking device 31 other than the brake arms 32 can be disposed away from a portion in the vicinity of the electrode tip 4, a thickness of the portion in the vicinity of the electrode tip 4 in the removing device M2 can be made, not thick, but slim, that permits easy removal of the electrode tip 4 fitted in the tight space between the shanks 1 and 2. Moreover, in the embodiment device, three claws 45 are provided in an inner circumference of the pass through hole 47a in the turning plate 47 in radial directions. Because of this, since the fore ends 45b of the claws are engaged with the electrode tip 4 substantially equally in a circumference of the electrode tip 4 when the fore ends 45b of the claws 45 are engaged with the electrode tip 4, preventing tilting of the electrode tip 4, deformation of the tapered shaft 3 on the shanks 1 and 2 can be prevented. Though it is shown that there are three claws 45 provided on an inner circumference of the pass through hole 47a in the turning plate 47 in radial directions in the second embodiment, four or more than four claws may be provided on the inner circumference of the pass through hole 47a. And, as a variation of the first embodiment device, only one claw 45 with the fore end 45b projected slightly further than the one of the second embodiment may be provided, so that the outer circumference of the electrode tip 4 presses the inner circumference of the pass through hole 47 opposite to the claw 45 when fore end of the claw comes into engagement with the electrode tip. Further, as a variation of the first embodiment device, only two claws 45 of the second embodiment are used with no slot 47b for the rest of the claw 45 formed, so that the outer circumference of the electrode tip 4 presses the inner circumference of the pass through hole 47 when the fore ends of the claws come into engagement with the electrode tip. Moreover, with regard to the rotation braking force of the brake arms 32 against the holding members 20 and 40 in the first and second embodiments, it is required that the holding member 20 and 40 is turned together with the turning plate 27 in a regular direction against the rotation braking force of the brake arms 32 when the fore end 25b and 45b of the claw 25 and 45 is engaged with the electrode tip 4 deeply, to increase a claw engagement resistance, that leads the rotation of the claw 25 and 45 difficult such that the rotation torque of the turning plate 27 and 47 acts on the rotation action surfaces 21d and 22e and 41d and 42d on the supporting portion of the claw 25 and 45. To do this, it is required that a compression force of the spring 34 is adjusted appropriately such that the rotation braking force of the brake arm 32 is not excessive for tuning the turning plate 27and 47 in a regular direction by the holding member 20 and 40 before the fore end 25b and 45b of the claw 25 and 45 is directed to a center direction of the electrode tip 4(before the first engagement with the electrode tip 4).

The device for removing an electrode tip brings the turning plate around the electrode tip such that the electrode tip is inserted into the pass through hole in the turning plate, and turns the turning plate in a regular direction. Then, the engagement compression surface of the turning plate is brought into contact with the claw to rotate the claw to an engagement region, such that the fore end of the claw is engaged with the outer circumference of the electrode tip, holding the electrode tip within the pass through hole. If the turning plate is rotated in a regular direction further, resulting to increase the claw engagement resistance, the holding member receives a rotating torque from the regular rotating turning plate, taking the supporting portion of the claw as a rotation action surface, to rotate in the regular direction against the rotation braking force together with the turning plate. That is, because the holding rotates together with the claw under a condition that the holding member makes the claw to engage with the electrode tip to hold the electrode tip in the pass through hole, the electrode tip rotates in a regular direction of the turning plate. And, even if the electrode tip rotates slightly, the fitting state of the electrode tip to the tapered shaft of the shank is released. Accordingly, if the turning plate and the holding member and the like are moved toward a fore end of the shank, the electrode tip can be removed from the shank. After the turning plate and the holding member are disposed at predetermined positions, the turning plate is reversed. Then, the disengagement compression surface of the turning plate is brought into contact with the claw, to rotate the claw until the fore end of the claw is disposed in the disengagement region at which the hold on the electrode tip in the pass through hole is released, to drop the electrode tip from the pass through hole in the turning plate into a predetermined position. That is, since the reversing of the turning plate is a rotation in a direction in which the engagement resistance of the claw is reduced, not the holding member is rotated on receiving the rotation braking force, but only the turning plate is rotated, to rotate the claw to the disengagement region. Therefore, since the device for removing an electrode tip of the present invention has the turning plate, and the holding member having the claw held therein, and etc., in the vicinity of the electrode tip 4, and moreover, since a rotating mechanism itself that removes the electrode tip also serves as a mechanism that holds the removed electrode tip, the device can be made slim, to permit easy removal of the electrode tip fitted in a tight space between the shanks. And, what is required for removal of the electrode tip is a simple engagement of the claw with the electrode tip, there is no noise of impact, and occurrence of noise during working is suppressed. Provided that the holding member is disposed to pass through the pass through hole in the turning plate, with the end portion projected from the turning plate, so that the rotation braking force applied to the holding member is generated by the brake arms pressing the outer circumference of the holding member, to apply a friction force to the outer circumference by using bias means, since a thickness of the brake arms can be limited within a thickness of the holding member and portions of the brake device other than the brake can be disposed away from a place in the vicinity of the electrode tip, a thickness of the portions in the vicinity of the electrode tip in the removing device can be made, not thick, but slim, even after the brake device is provided, thereby permitting easy removal of even an electrode tip fitted in a tight space between the shanks. Moreover, in a case when it is set that one claw is provided and a dimension of an inner diameter of the pass through hole in the holding member or the turning plate is to be a dimensioned such that an outer circumference of the electrode tip pressed by the claw can be pressed onto a portion of an inner circumference of the pass through hole opposite to the claw, as the holding on the electrode tip in the pass through hole in the holding member or turning plate is a two point gripping between the fore end of the claw and the portion of the inner circumference of the pass through hole in contact with the electrode tip as well as an engagement with the electrode tip, a stable holding on the electrode tip can be made available. In this instance, if grooves are formed in the portion of the inner circumference of the pass through hole opposite to the claw when the claw is disposed in the engagement region, convex portions at edges of the grooves also can be come into engagement with the electrode tip together with the fore end of the claw when the electrode tip is held, a more stable holding on the electrode tip can be made available. And, in a case when three or more than three claws are provided on the inner circumference of the pass through hole in radial directions, since the fore ends of the claws make engagement with the electrode tip at substantially equal intervals in a circumferential direction of the outer circumference of the electrode tip, tilting of the electrode tip is prevented, and deformation of the tapered shaft of the shank can be prevented to the utmost.

It will be apparent to those skilled in the art that various modifications and variations can be made in the device for removing an electrode tip of the present invention without departing from the scope of the invention. Thus, it is intended that the present invention cover the modifications and variations of this invention provided they come within the scope of the appended claims.

## Claims

1. A device (M1; M2) for removing an electrode tip (4) fitted to a tapered shaft (3) of a shank (1; 2) in a resistance welder by turning the electrode tip (4), the device (M1; M2) comprising
a - a body (10) with a drive motor and gears (12) for driving a turning plate (27; 47) in regular or reverse direction;
b - said turning plate (27; 47) having a pass through hole (27a; 47a) at a center of rotation with a diameter such that the electrode tip (4) can be inserted therein;
c - a holding member (20; 40) having a rotation center (X) coincident with the turning plate (27; 47), an end projection (21) and a pass through hole (22j) so that the electrode tip (4) can be inserted therein on the rotation center (X), the holding member (20; 40) being rotatably connected to the turning plate (27; 47) so that the end projection (21) is projecting from the turning plate (27; 47), wherein the holding member (20; 40) is adapted to make a relative rotation with the turning plate (27; 47) and to rotate independently from the turning plate (27; 47) on reception of a rotation braking force;
d - at least one claw (25; 45) having a fore end (25b; 45b) and a rotation shaft (35h; 45g) parallel to the axis direction of the pass through holes (27a; 47a), the claw (25; 45) being further disposed on an inner circumference of the pass through hole (27a; 47a) of the turning plate (27; 47) such that, when the claw (25; 45) is rotated, the fore end (25b; 45b) of the claw (25; 45) can be disposed either in an engagement region for engaging the outer circumference of the electrode tip (4) to hold this electrode tip (4) in the pass through holes (27a; 47a) or in a disengagement region for disengaging the fore end (25b; 45b) of the claw (25; 45) from the outer circumference of the electrode tip (4) to release the hold on the electrode tip (4);
e - a braking device (31) including a compression spring (34), wherein a rotation braking force is set by the spring (34) to rotate the turning plate (27; 47) together with the holding member (20; 40) on reception of a rotation torque in the regular rotation of the turning plate (27; 47), this rotation torque coming from the claw (25; 45) when the daw (25; 45) engagement resistance increases (25; 45) as the claw (25; 45) is disposed in the engagement region and engages the electrode tip (4);
***characterized by***
f - a case (14) fixed to the body (10), wherein the turning plate (27; 47) is rotatably connected to the case (14);
g - the turning plate (27; 47) including an engagement pressing surface (27c; 47c) for pressing the claw (25; 45) to rotate it into the engagement region in the regular rotation and a disengagement pressing surface (27d; 47d) for pressing the claw (25; 45) to rotate it to the disengagement region in the reverse direction;
h - the claw (25; 45) being rotatably connected to the holding member (20; 40) by the rotation shaft (25h; 45g);
i - the braking device (31) also including pair of brake arms (32), each first end of the brake arms (32) being connected to the case (14) and each second arm end cooperating with the projection end (21) of the holding member (20; 40) for transmitting the braking force thereto, and each arm (32) having a spring seat (32b) for receiving the spring (34).

2. A device as claimed in claim 1 **characterized in that** the brake arms (32) of the braking device (31) are adapted to press an outer circumference of the holding member (20; 40) for applying a friction resistance thereto.

3. A device as claimed in claim 1 or 2, **characterized in that** there is provided only one claw (25), and an inside diameter of the pass through hole (27a) of the holding member (20) or the turning plate (27) is dimensioned such that an outer circumference of the electrode tip (4) pressed by the claw (25) can be pressed onto a portion of an inner circumference of the pass through hole (27a) opposite to the claw (25) when the claw (25) is in the engagement region.

4. A device as daimed in claim 3, **characterized in that** grooves (22k) are formed in the portion of an inner circumference of the pass through hole (22j) opposite to the claw (25) when the claw (25) is in the engagement region.

5. A device as claimed in claim 1 or 2, **characterized in that** three or more than three claws (45) are provided on portions of the pass through hole (47a) in radial directions.

## Patentansprüche

1. Vorrichtung (M1; M2) zum Entfernen einer Elektrodenspitze (4), die auf einem verjüngten Dorn (3) eines Schaftes (1; 2) in einem Widerstandsschweißgerät sitzt, durch Drehen der Elektrodenspitze (4), wobei die Vorrichtung (M1; M2) folgendes umfaßt:
a - einen Körper (10) mit einem Antriebsmotor und Zahnrädern (12) zum Antrieb einer Drehplatte (27; 47) in regulärer Richtung oder in entgegengesetzter Richtung;
b - die Drehplatte (27; 47) weist eine Durchgangsbohrung (27a; 47a) mit einem solchen Durchmesser, daß die Elektrodenspitze (4) darin eingesetzt werden kann, in einem Drehmittelpunkt auf;
c - ein Halteelement (20; 40) mit einem Drehmittelpunkt (X), der mit der Drehplatte (27; 47) zusammenfällt, einem Endvorsprung (21) und einer Durchgangsbohrung (22j), so daß die Elektrodenspitze (4) darin auf dem Drehmittelpunkt (X) eingesetzt werden kann, wobei das Halteelement (20; 40) verdrehbar mit der Drehplatte (27; 47) so verbunden ist, daß der Endvorsprung (21) von der Drehplatte (27; 47) aus vorsteht, wobei das Halteelement (20; 40) dazu eingerichtet ist, eine Relativdrehung mit der Drehplatte (27; 47) auszuführen und sich nach Aufnahme einer Drehbremskraft unabhängig von der Drehplatte (27; 47) zu drehen;
d - mindestens eine Klaue (25; 45) mit einem vorderen Ende (25b; 45b) und einer Drehwelle (35h; 45g), die parallel zur Achsrichtung der Durchgangsbohrungen (27a; 47a) verläuft, wobei die Klaue (25; 45) ferner auf einem Innenumfang der Durchgangsbohrung (27a; 47a) der Drehplatte (27; 47) so angeordnet ist, daß, wenn die Klaue (25; 45) gedreht wird, das vordere Ende (25b; 45b) der Klaue (25; 45) entweder in einem Eingriffsbereich zum Eingriff mit dem Außenumfang der Elektrodenspitze (4), um diese Elektrodenspitze (4) in den Durchgangsbohrungen (27a; 47a) zu halten, oder in einem Freigabebereich zur Freigabe des vorderen Endes (25b; 45b) der Klaue (25; 45) vom Außenumfang der Elektrodenspitze (4), um die Halterung der Elektrodenspitze (4) zu lösen, angeordnet ist;
e - eine Bremseinrichtung (31) mit einer Druckfeder (34), wobei eine Drehbremskraft durch die Feder (34) eingestellt wird, um die Drehplatte (27; 47) zusammen mit dem Halteelement (20; 40) nach Aufnahme eines Drehmomentes bei der regulären Drehung der Drehplatte (27; 47) zu drehen, wobei dieses Drehmoment von der Klaue (25; 45) kommt, wenn der Eingriffswiderstand der Klaue (25; 45) zunimmt (25; 45), sobald die Klaue (25; 45) im Eingriffsbereich angeordnet ist und in Eingriff mit der Elektrodenspitze (4) tritt;
***gekennzeichnet dadurch, daß***
f - am Körper (10) ein Gehäuse (14) befestigt ist, wobei die Drehplatte (27; 47) verdrehbar mit dem Gehäuse (14) verbunden ist;
g - die Drehplatte (27; 47) eine Eingriffsdruckfläche (27c; 47c) zum Drücken der Klaue (25; 45), um diese in der regulären Drehrichtung in den Eingriffsbereich zu drehen, und eine Eingriffsfreigabe-Druckfläche (27d; 47d) zum Drücken der Klaue (25;45) umfaßt, um diese in der Gegenrichtung in den Eingriffsbereich zu drehen;
h - die Klaue (25; 45) durch die Drehwelle (25h; 45g) verdrehbar mit dem Halteelement (20; 40) verbunden ist;
i - die Bremseinrichtung (31) auch noch ein Paar von Bremsarmen (32) aufweist, wobei jedes erste Ende der Bremsarme (32) mit dem Gehäuse (14) verbunden ist und jedes zweite Armende mit dem Endvorsprung (21) des Halteelementes (20; 40) zusammenwirkt, um die Bremskraft auf dieses zu übertragen, und wobei jeder Arm (32) einen Federsitz (32b) zur Aufnahme der Feder (34) aufweist.

2. Vorrichtung nach Anspruch 1, **dadurch gekennzeichnet, daß** die Bremsarme (32) der Bremseinrichtung (31) dazu eingerichtet sind, gegen einen Außenumfang des Halteelementes (20; 40) zu drücken, um an dieses einen Reibwiderstand anzulegen.

3. Vorrichtung nach Anspruch 1 oder 2, **dadurch gekennzeichnet, daß** nur eine Klaue (25) vorgesehen und ein Innendurchmesser der Durchgangsbohrung (27a) des Halteelementes (20) oder der Drehplatte (27) so bemessen ist, daß ein Außenumfang der durch die Klaue (25) gedrückten Elektrodenspitze (4) auf einen Abschnitt eines Innenumfangs der Durchgangsbohrung (27a) gegenüber der Klaue (25) gedrückt werden kann, wenn sich die Klaue (25) im Eingriffsbereich befindet.

4. Vorrichtung nach Anspruch 3, **dadurch gekennzeichnet, daß** Nuten (22k) in dem Abschnitt eines Innenumfangs der Durchgangsbohrung (22j) gegenüber der Klaue (25) ausgebildet sind, wenn sich die Klaue (25) im Eingriffsbereich befindet.

5. Vorrichtung nach Anspruch 1 oder 2, **dadurch gekennzeichnet, daß** drei oder mehr als drei Klauen (45) in radialen Richtungen auf Abschnitten der Durchgangsbohrung (47a) vorgesehen sind.

## Revendications

1. Dispositif (M1 ; M2) pour enlever une extrémité d'électrode (4) montée sur un arbre conique (3) d'une tige (1) dans une soudeuse par résistance en faisant tourner l'extrémité d'électrode (4), le dispositif (M1 ; M2) comprenant :
a - un corps (10) avec un moteur d'entraînement et des engrenages (12) pour entraîner une plaque tournante (27 ; 47) dans la direction normale ou inverse ;
b - ladite plaque tournante (27 ; 47) ayant un trou débouchant (27a ; 47a) au niveau du centre de rotation avec un diamètre de sorte que l'extrémité d'électrode (4) peut être insérée à l'intérieur de celui-ci ;
c - un élément de support (20 ; 40) ayant un centre de rotation (X) qui coïncide avec la plaque tournante (27 ; 47), une saillie d'extrémité (21) et un trou débouchant (22j) de sorte que l'extrémité d'électrode (4) peut être insérée à l'intérieur de celui-ci sur le centre de rotation (X), l'élément de support (20 ; 40) étant raccordé de manière rotative à la plaque tournante (27 ; 47) de sorte que la saillie d'extrémité (21) fait saillie à partir de la plaque tournante (27 ; 47), dans lequel l'élément de support (20 ; 40) est adapté pour réaliser une rotation relative avec la plaque tournante (27 ; 47) et pour tourner indépendamment de la plaque tournante (27 ; 47) suite à la réception d'une force de freinage de rotation ;
d - au moins une griffe (25 ; 45) dotée d'une extrémité avant (25b ; 45b) et d'un arbre de rotation (25h ; 45g) parallèle à la direction de l'axe des trous débouchants (27a ; 47a), la griffe (25 ; 45) étant disposée en outre sur une circonférence interne du trou débouchant (27a ; 47a) de la plaque tournante (27 ; 47) de sorte qu'au moment où la griffe (25 ; 45) tourne, l'extrémité avant (25b ; 45b) de la griffe (25 ; 45) peut être disposée soit dans une région de mise en prise pour mettre en prise la circonférence externe de l'extrémité d'électrode (4) pour supporter cette extrémité d'électrode (4) dans les trous débouchants (27a ; 47a), soit dans une région de dégagement pour dégager l'extrémité avant (25b ; 45b) de la griffe (25 ; 45) de la circonférence externe de l'extrémité d'électrode (4) pour libérer le support sur l'extrémité d'électrode (4) ;
e - un dispositif de freinage (31) comprenant un ressort de compression (34), dans lequel une force de freinage de rotation est déterminée par le ressort (34) pour faire tourner la plaque tournante (27 ; 47) conjointement à l'élément de support (20 ; 40) suite à la réception d'un couple de rotation dans la rotation normale de la plaque tournante (27 ; 47), ce couple de rotation provenant de la griffe (25 ; 45) lorsque la résistance de mise en prise de la griffe (25 ; 45) augmente, (25 ; 45) étant donné que la griffe (25 ; 45) est disposée dans la région de mise en prise et met en prise l'extrémité d'électrode (4) ;
**caractérisé en ce qu'**il comprend :
f - un boîtier (14) fixé au corps (10), dans lequel la plaque tournante (27 ; 47) est raccordée de manière rotative au boîtier (14) ;
g - la plaque tournante (27 ; 47) comprenant une surface de pression de mise en prise (27c ; 47c) pour comprimer la griffe (25 ; 45) afin de la faire tourner dans la région de mise en prise dans la rotation normale et une surface de pression de dégagement (27d ; 47d) pour comprimer la griffe (25 ; 45) afin de la faire tourner dans la région de dégagement dans la direction inverse ;
h - la griffe (25 ; 45) étant raccordée de manière rotative à l'élément de support (20 ; 40) par l'arbre de rotation (25h ; 45g) ;
i - le dispositif de freinage (31) comprenant également une paire de leviers de frein (32), chaque première extrémité des leviers de frein (32) étant raccordée au boîtier (14) et chaque seconde extrémité de levier coopérant avec l'extrémité de saillie (21) de l'élément de support (20 ; 40) pour transmettre la force de freinage à celui-ci, et chaque levier (32) ayant un siège de ressort (32b) pour recevoir le ressort (34).

2. Dispositif selon la revendication 1 **caractérisé en ce que** les leviers de frein (32) du dispositif de freinage (31) sont adaptés pour appuyer sur une circonférence externe de l'élément de support (20 ; 40) pour appliquer une résistance de frottement à celui-ci.

3. Dispositif selon la revendication 1 ou 2, **caractérisé en ce que** l'on ne prévoit qu'une griffe (25), et un diamètre intérieur du trou débouchant (27a) de l'élément de support (20) ou bien la plaque tournante (27) est dimensionnée de sorte qu'une circonférence externe de l'extrémité d'électrode (4) comprimée par la griffe (25) peut être comprimée sur une partie d'une circonférence interne du trou débouchant (27a) opposé à la griffe (25) lorsque la griffe (25) est dans la région de mise en prise.

4. Dispositif selon la revendication 3, **caractérisé en ce que** des rainures (22k) sont formées dans la partie d'une circonférence interne du trou débouchant (22j) opposé à la griffe (25) lorsque la griffe (25) est dans la région de mise en prise.

5. Dispositif selon la revendication 1 ou 2, **caractérisé en ce que** trois ou plus de trois griffes (45) sont prévues sur des parties du trou débouchant (47a) dans des directions radiales.
